Europäisches Patentamt

European Patent Office

Office européen des brevets

(19)

(11) Publication number: **0 300 457**

**A2**

# EUROPEAN PATENT APPLICATION

(21) Application number: 88111701.4

(22) Date of filing: 20.07.88

(51) Int. Cl.⁴ **G11B 20/12 , G11B 7/013 , G06K 19/08**

(30) Priority: 20.07.87 JP 180268/87

(43) Date of publication of application:
25.01.89 Bulletin 89/04

(84) Designated Contracting States:
DE FR GB IT

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Nishito, Akihiro**
**c/o Patent Division KABUSHIKI KAISHA**
**TOSHIBA**
**1-1 Shibaura 1-chome Minato-ku Tokyo**
**105(JP)**

(74) Representative: **Henkel, Feiler, Hänzel &**
**Partner**
**Möhlstrasse 37**
**D-8000 München 80(DE)**

(54) Data storage system capable of forming sector-to-sector separation sections.

(57) A rectangular card includes a base and recording tracks provided on the base, for recording data. The tracks are disposed in a longitudinal direction of the base and each of the tracks includes plural sectors (1 ~ n). Each of the sectors (1 ~ n) has an identification code (31g) for designating itself and separation data (31f) at its end for separating one of the sectors (1 ~ n) from the other.

FIG. 1

## Data storage system capable of forming sector-to-sector separation sections

The present invention relates to a data storage system and, in particular, to a system for forming a sector-to-sector separation section in a data storage card.

A card is known as a recording medium, which is employed in a data storage system. A magnetic card is often currently used which has a magnetic recording section, but that storage capacity is small on the order of 72 bytes. The card has an advantage over any other recording mediums, such as a disk, in that it can be carried. The development has been made on the applications of cards and, as a result, IC cards and optical memory cards have recently been manufactured to satisfy a growing demand for high multi-function features and for great memory capacity.

Two types of optical memory cards are known: One is a ROM type, which is capable of reproduction only and the other is a "write-once" type capable of adding new data to data stored initially. The first type of optical card of has a memory capacity of about 2 M bytes and is suitable for the use among a great number of users. The second type of optical card also has a memory capacity of about 2 M bytes and is suitable for personal use. U.S. patent No. 4,680,456 is a known example of the "write-once" card.

This type of card has a plurality of tracks along its length, on which data can be written. The drawback of this card is that each track can carry only one sector data which is used for controlling data. Therefore, in the case where some data, such as address data, are destroyed or found as being ineffective, all data and areas on that track become ineffective, resulting in a greater data loss.

Recently, an optical memory card has been developed which enables a plurality of sector data to be recorded on one recording track. However, since the respective sector size is fixed within each track, it becomes difficult to control the data and address data. Furthermore, the arrangement of the card handling apparatus becomes complicated.

One object of the present invention is to provide a data storage card which can hold a plurality of sector data of varying length within a respective recording track thereof.

Another object of the present invention is to provide a method by means of which a plurality of sector data of varying length can be formed within a respective recording track of the data storage card of the present invention.

Another object of the present invention is to provide a data storage card which can simplify the control of data and address data.

Still another object of the present invention is to allow the construction of a data handling apparatus to be simplified.

According to the present invention, there is provided a method for recording a series of data on a recording track provided on a rectangular card, the track disposed along longitudinal direction thereof, the method comprising the steps of:

(a) recording first data on the recording track;

(b) recording separation data representing the end of the first data at a portion of the recording track following to the first data recorded on the recording track; and

(c) recording second data at a portion of the recording track following to the separation data.

Further, according to the present invention, there is provided a rectangular card for storing data comprising a base, and recording tracks providing on the base, for recording data thereon, the tracks disposed along longitudinal direction of the base, and each of the tracks including a plurality of sectors, each sector having a recording portion for storing a datum including an identification code designating each sector, wherein the sectors are located in series along the recording track.

The foregoing aspects and other features of the present invention will now be explained below in the following description, taken in conjunction with the accompanying drawings, wherein:

Fig. 1 shows a data recording format corresponding to one track of an optical memory card according to an embodiment of the present invention;

Fig. 2 is a block diagram showing an apparatus for handling the optical memory card; and

Fig. 3 shows a plurality of tracks formed in the optical memory card.

An optical memory card according to an embodiment of the present invention will now be explained below, with reference to the accompanying drawings.

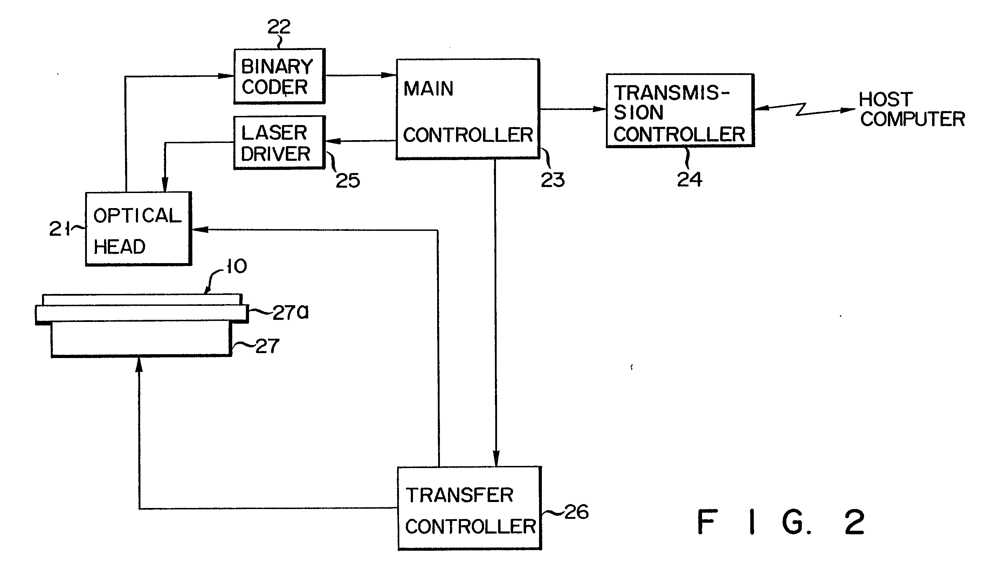

Fig. 2 is a block diagram of a data handling apparatus, which is used with an optical memory card according to one embodiment of the present invention. Optical memory card 10 is used as a data storage medium. During use, it is placed on holder 27a of card transport section 27. Card 10 is movable by, for example, card transport section 27 in an X-axis direction. Optical head 21 is located over optical memory card 10, thereby to cause data to be written thereinto and read out (reproduced) therefrom, and is movable in a Y-axis direction that is, a direction perpendicular to the direction of movement of optical memory card 10. Optical head 21 comprises, for example, a semiconductor laser oscillator, a convex lens, a polarizing beam splitter, a λ/4 plate, an object lens, a condensing lens, and an optical sensor for data readout and for correcting the position of the object lens. Optical head 21 writes data into card 10, or reads data therefrom, by performing a focusing (correction for focusing error) and a tracking (correction for tracking deviation) operation, using light reflected from card 10.

The output of optical head 21, and hence the output of the optical sensor, is supplied to a binary coder, where it is converted to a binary output and supplied to main controller 23. Main controller 23 controls the operation of the aforementioned handling apparatus, in accordance with writing instructions or reproducing instructions from a host computer, not shown. Transmission controller 24, laser driver 25 and transfer controller, etc., are driven by main controller 23 when data is written into, and reproduced from, optical memory card 10.

Assume that a data writing instruction and data are supplied from the host computer to main controller 23, via transmission controller 24. In this case, main controller 23 controls laser driver 25 which drives a semiconductor laser oscillator located within optical head 21 to generate laser light. Main controller 23 controls transfer controller 26 to drive optical head 21 in the Y-axis direction and card transfer section 27 in the X-axis direction. It is thus possible to direct the laser light from optical head 21 to a predetermined data writing position on optical memory card 10. When the laser light coming from optical head 21 coincides with the aforementioned predetermined writing position, optical head 21 writes data on the predetermined writing position on card 10, while servo-controlling the object lens, not shown, using light reflected from the predetermined writing position on card 10 via binary coder 22.

Let it be assumed that main controller 23 receives from the host computer via transmission controller 24, a reproducing instruction and reproducing data including writing position data to be reproduced. In this case, main control circuit 25 controls laser driver 25, driving the semiconductor laser oscillator within optical head 21 to produce laser light corresponding to the reproducing data. Main controller 23 controls transfer controller 26 to drive optical head 21 in the Y-axis direction and card transport section in the X-axis direction. By so doing, it is possible to direct laser light from optical head 21 on a predetermined writing position of card 10. When laser light from optical head 21 coincides with the predetermined reading position, corresponding data is read out, during which the object lens, not shown, is servo-controlled by main controller 23, through the utilization of the reflection light from card 10 which is supplied via binary coder 22. The data thus read out is sent to the host computer via transmission controller 24.

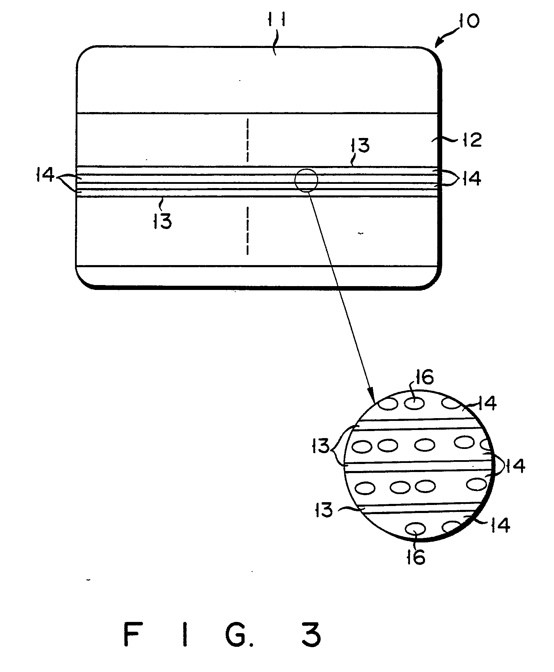

Fig. 3 shows optical memory card 10. Optical memory card 10 has card base 11 made of, for example, plastics and stripe 12 formed as an optical recording surface along the length of card base 11, and is protected with transparent plastics, not shown. A plurality of tracking lines 13, ... are equidistantly provided as tracking guides in a parallel array along the length of the card. Tracks (recording tracks) 14, ... are defined, as for example first, second, ..., n-th tracks, from the upper side toward the lower side of the card.

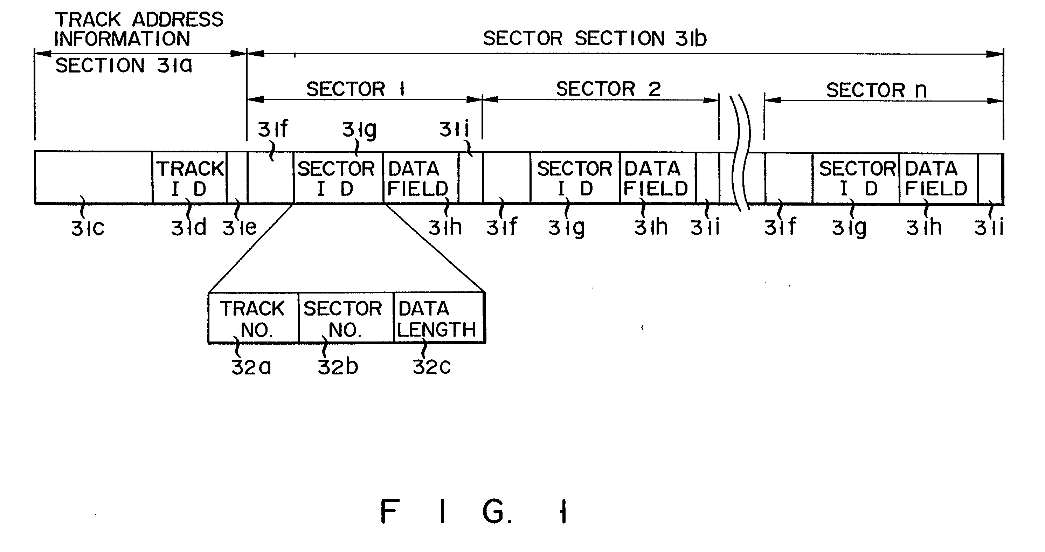

A plurality of data are recorded in sector (sector data) units on the respective tracks. The data are digitally recorded, as pits, on the respective tracks by, for example, the laser light. In this case, data is recorded in accordance with a predetermined data recording format. Fig. 1 shows a data recording format of optical memory card 10. The data recording format comprises track address data section 31a and sector section 31b.

Track control data is recorded on track address data section 31a to allow a row address to be controlled by the card handling apparatus. The track control data comprises, for example, preamble section 31c for producing a writing or reproducing clock, track ID 31d, such as a track number, for controlling the whole track, and end mark 31e.

Sector section 31b comprises first, second, ... and n-th sectors as sector data units, for example, non-recorded (separation) section 31f, sector ID 31g, data field 31h and end mark 31i. Section 31f is used to separate track address data section 31a from sector section 31b. Separation section 31f is constituted by a mark showing that, for example, the sector is effective or ineffective. Sector ID 31g comprises data of several tens of bytes and includes, for example, track number 32a, sector number 32b, which manage the sector and data length 32c, of data field 31h as a data body. A data correction code is employed for data recording within data field 31h. For errors relating to sector ID 31g, a parity check, CRC (cyclic redundancy check) and so on are employed to prevent an increase of an overhead.

The operation of the aforementioned system will be explained below.

Optical memory card 10 is inserted into the card handling apparatus, that is, placed on holder 27a of card transport section 27 and reproducing data is sent from the host computer. In this case, main controller 23 controls laser driver 25 and transfer controller 26 in accordance with reproducing data supplied via transmission controller 24, that is, for example, a reproduction instruction, sector number and track number showing the recording position of the reproducing data. By so doing, optical head 21 is moved to a sector of a desired track. At this time, it is determined whether or not the reproducing data from the host computer coincides with track number 32a and sector number 32b in sector ID 31g. If there is a coincidence, data in data field 31h of a corresponding sector is read out in accordance with data length 32c. The data is supplied to binary coder 22 and transferred via transmission controller 24 to the host computer.

With optical memory card 10 inserted into a card reader, recording data is transmitted from the host computer via transmission controller 24 to main controller 23. Main controller 24 controls laser driver 25 and transfer controller 26 in accordance with the recording instruction and data to be read, moving optical head 21 to a desired track (writing position). Laser light is demodulated in accordance with the recording data from the computer and directed to the corresponding writing position, thus performing a data recording. By so doing, the aforementioned data, as well as track number 32a, sector number 32b and data length 32c in sector ID 31g, are recorded on the corresponding track in accordance with the data format shown in Fig. 1. If previously recorded data is found ineffective by this recording operation, then the ineffective data (for example FF) is written into non-recorded section 31f in the sector, regarding the data in that sector as being ineffective.

As will be appreciated from the above, some sector data in each track are separated from sector to sector. Since, in this way, the respective sector data is constituted by variable data, it is thus possible to treat the sectors of varying length in one recording track.

That is, the address data, constituted by the track number and sector number, and data length are added to the respective one of the sectors on one track which are separated with the non-recorded section and it is thus possible to specify sectors of varying data length on a single track and hence to perform a data write/read operation in sector units. As a result, the data and address can readily been controlled and hence data control can be made in accordance with the lengths of the respective data on the respective track. Thus the data handling apparatus can be so designed as to control data readily.

For the write-once type optical memory card in particular, the sector data after being recorded can readily been handled as being ineffective with a mark, such as FF, written thereon.

If proper different error correction codes are used for the control data (track ID, sector ID) and data body (data field), it is possible to reduce the overhead involved. For this reason, a data capacity can be increased over the whole card and a risk of the data being unable to be read out due to the destruction of the address data can be suppressed to a possible minimum extent.

Although, in the aforementioned embodiment, the optical memory card (optical recording medium) has been explained in conjunction with the present invention, the present invention is not restricted to that memory card. For example, the recording medium is not restricted to the aforementioned card format.

The present invention can be changed or modified without departing from the spirit and scope of the present invention.

## Claims

1. A method for recording a series of data on a recording track (14) provided on a rectangular card (10), the track (14) disposed along longitudinal direction thereof, the method comprising the steps of:

(a) recording first data (1 ~ n) on the recording track (14) and (b) recording second data (1 ~ n) at a portion of the recording track (14) following to the first data (1 ~ n) recorded on the recording track (14), characterized in that the method further comprises the step of (c) recording separation data (31f) representing the end of the first data (1 ~ n) at the portion of the recording track (14) between the first data (1 ~ n) and the second data (1 ~ n).

2. The method according to claim 1, characterized in that each of the first data (1 ~ n) and second data (1 ~ n) includes data (32c) representing the length thereof.

3. The method according to claim 1, characterized in that each of the first data (1 ~ n) and second data (1 ~ n) includes address data having a track number (32a) and a sector number (32b).

4. The method according to claim 1, characterized in that the separation data (31f) includes a non-recorded section.

5. A rectangular card (10) for storing data comprising:

a base (11); and

recording tracks (14) providing on the base (11), for recording data thereon, the tracks (14) disposed along longitudinal direction of the base (11), and each of the tracks (14) including a plurality of sectors (1 ~ n), characterized in that each of the sectors (1 ~ n) has a recording portion for storing a datum including an identification code (31g) designating each sector, wherein the sectors (1 ~ n) are located in series along the recording track (14).

6. The card (10) according to claim 5, characterized in that each of the sectors (1 ~ n) includes data (32c) representing the length of the datum.

7. The card (10) according to claim 5, characterized in that each of the sectors (1 ~ n) includes address data having a track number (32a) and a sector number (32b).

TRACK ADDRESS
INFORMATION
SECTION 31a

SECTOR SECTION 31b

SECTOR 1   SECTOR 2   SECTOR n

31f   31g   31i

TRACK
I D

SECTOR
I D

DATA
FIELD

SECTOR
I D

DATA
FIELD

SECTOR
I D

DATA
FIELD

31c   31d 31e   31h 31f 31g   31h 31i   31f 31g   31h 31i

TRACK
NO.

SECTOR
NO.

DATA
LENGTH

32a   32b   32c

F I G. 1

EP 0 300 457 A2

F I G. 2

EP 0 300 457 A2

F I G.  3